(19) Europäisches Patentamt / European Patent Office / Office européen des brevets

(11) **EP 3 065 039 A1**

(12) **EUROPEAN PATENT APPLICATION**

(43) Date of publication:
07.09.2016 Bulletin 2016/36

(51) Int Cl.:
*G06F 3/048* [(2006.01)]   *G11B 27/10* [(2006.01)]
*G11B 27/34* [(2006.01)]

(21) Application number: 15305327.7

(22) Date of filing: 04.03.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(71) Applicant: Thomson Licensing
92130 Issy-les-Moulineaux (FR)

(72) Inventors:
• Fradet, Matthieu
35576 Cesson-Sévigné (FR)
• Demarty, Claire-Hélène
35576 Cesson-Sévigné (FR)
• Oisel Lionel
35576 Cesson-Sévigné (FR)

(74) Representative: Rolland, Sophie et al
Technicolor
1-5, rue Jeanne d'Arc
92443 Issy-les-Moulineaux (FR)

(54) **Method for browsing a collection of video frames and corresponding device**

(57) The invention relates to a method for browsing a collection of P video frames through a user interface comprising N cells disposed along a time line with N<P. The method comprises the steps of:
- determining (S1) a subset of N key frames representative of the collection,
- displaying (S2) the N key frames in the N cells according to a chronological order, the N cells being classified as current cell, past cells and future cells,
- receiving (S3) an input command requesting to transfer a selected key frame displayed in a cell Ci to a cell Cj of the UI,
- in response to the input command, updating (S4) the key frame displayed in the cell $C_j$ by the selected key frame and updating accordingly the key frames displayed in the other cells by updating key frames while maintaining the chronological order of the key frames in the N cells.

Collection of P
video frames

Determining a subset of N
video frames, N<P — S1

Displaying the N video
frames in the cells of the UI
according to a chronological
order — S2

Receiving a request for
transferring a video frame
from a cell $C_i$ to a cell $C_j$
of the UI — S3

Updating the video frames
displayed in the cells
of the UI — S4

FIG.8

**Description**

**1. Technical Field**

The present invention relates generally to the field of video browsing. The invention concerns a method for browsing video frames in a timeline user interface.

**2. Background Art**

Timeline user interfaces are classically used for browsing collections of video frames. Such a timeline user interface is generally embedded in video players, video editing software or video summarizing software. In these user interfaces, the video frames are displayed in their chronological order and they introduce the notions of current frame, past frames (left side of the current frame) and future frames (right side of the current frame).

The layouts (designs) of these timeline user interfaces may be basically classified into two categories: 1-D layouts and 2-D layouts.

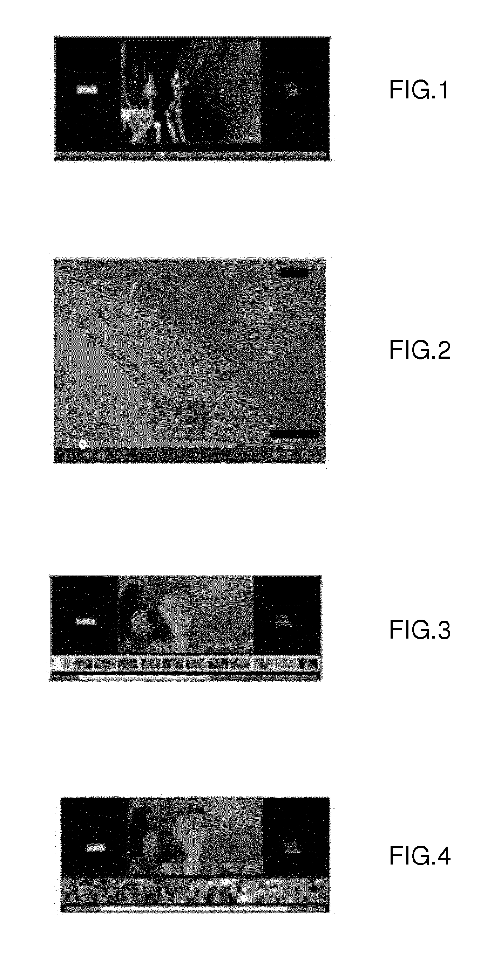

The 1-D layout comprises generally a horizontal timeline whose left end is associated to the start of the video sequence and the right end is associated to the end of the video sequence. Classic video players, such as the one illustrated by Fig.1, present a simple horizontal scrollbar with a cursor that depicts current instant. One drawback of this representation is that, except the shown current frame and the relative position of the cursor to the start and the end, the user has no information about the rest of the sequence. Sometimes, as illustrated by Fig.2, as your mouse flies over the timeline, the thumbnail of the corresponding video instant is shown.

As other 1-D horizontal layouts, key-frame filmstrips as illustrated by Fig.3 (reproduced from Barnes et al. Siggraph2010) present a horizontal image strip in which key-frames are stacked horizontally in a chronological order. Therefore, in order to watch the video from any key-frame, one just needs to click on it. Video Tapestries as illustrated by Fig.4 (from Barnes et al. Siggraph2010) also exist and create a strip continuous in the spatial domain. In these tapestries, hard borders between discrete moments in time are removed to create a seamless composition.

For both key-frames filmstrips and tapestries, the length of strip is generally much greater than the user's screen width. So the user cannot have a global overview of the whole video sequence on a single screen. The user can view the whole strip, piece by piece, by dragging the strip to make visible another time range, or by tuning the step of the time subsampling of the displayed key-frames.

Tapestries and key-frame filmstrips only exploit the width of the user's screen but not the height. Such representations do not allow a global overview of the video sequence. So 2-D layouts have been developed in order to exploit the two dimensions (width and height) of the user's screen.

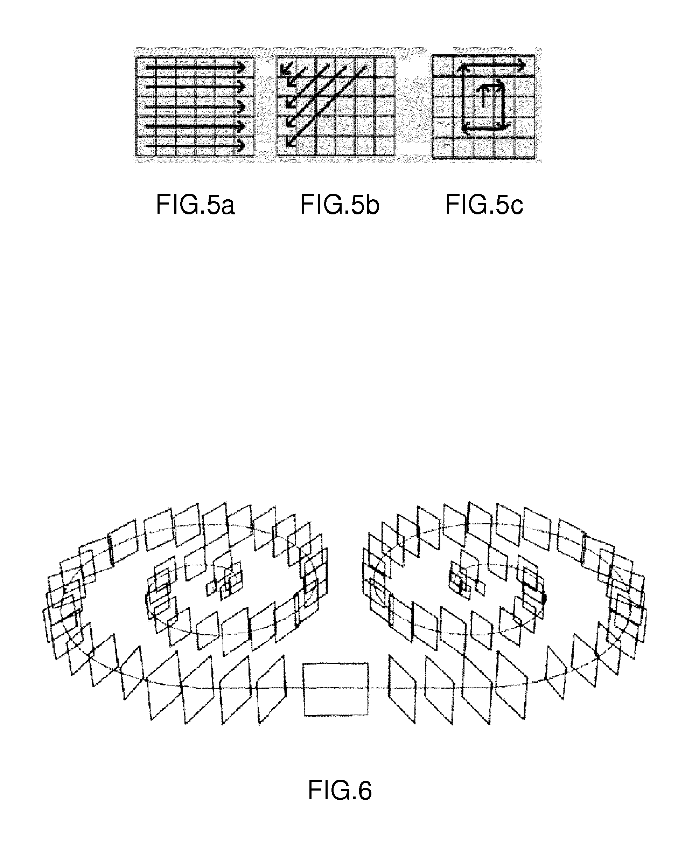

Figs 5a-5c illustrates examples of 2-D layouts: a book layout, a diagonal layout and a spiral layout. In the book layout (Fig.5a) and the diagonal layout (Fig.5b), the timelines are discontinuous, like broken lines. The book layout is often the one chosen for scene chapter selection in a DVD. Spiral layout (Fig.5c) is generally used to depict the past of an evolving story. Generally, the first video frame of the video sequence is set at the center of the spiral and the current video frame is set at the other (outermost) end of the spiral. The video frames subsequent to the current video frame are not visible.

Fig.6 illustrates another 2-D layout disclosed in the patent application GB 2 461 757. In this figure, the video frames of a video sequence are sequentially positioned along a path formed of two spirals. The video frame displayed at junction point between the two spirals is the most visible since it has the biggest size. The video frames move in sequence along the path in response to an input command to the system. With this layout, the user may view a plurality of video frames simultaneously. At the same time, the user is able to command the system to move the video frames in sequence along the path and so may bring an image of interest to a point (junction point) along the path where it may be examined more closely.

This system is configured to allow the user to scroll through the video frames. More specifically, it may be configured to move (fast forward or rewind) the video frames along the path by dragging a video frame to the left or to the right.

This layout is adapted to display consecutive video frames of a video sequence. When the video sequence, for example a movie, comprises a large amount of video frames, these latter can not be all displayed in the path. It is not adapted to zoom-in or zoom-out in some parts of the video sequence.

**3. Summary of Invention**

There is thus a need to propose enhanced browsing solutions that would enable to have an overview of the whole video sequence by displaying key frames representative of the whole video sequence and would enable the user to zoom-in or zoom-out easily on some part of the video sequence.

The present invention concerns a method for browsing a collection of P video frames through a user interface, wherein each video frame has a timestamp and wherein the user interface comprises N cells disposed along a time line with N<P, said method comprising the steps of:

- determining a subset of N video frames, called key frames, representative of the collection of video frames, said N key frames being non consecutive video frames of the collection,
- displaying the N key frames in the N cells of the user interface according to a chronological order, one of the N cells being defined as a current cell and the cells before and after the current cell along the time line being called past cells and future cells respectively,
- receiving an input command requesting to transfer a selected key frame displayed in a cell $C_i$ to a cell $C_j$ of the user interface, the cells $C_i$ and $C_j$ being distinct,
- in response to the input command, updating the key frame displayed in the cell $C_j$ by the selected key frame and updating the key frames displayed in at least the cell $C_i$ and the cells comprised between the cell $C_i$ and the cell $C_j$, by frames, called updating key frames, of the collection while maintaining the chronological order of the key frames in the N cells, at least one of the updating key frames being not included in the subset of N key frames.

Hence, according to the invention, a subset of N key frames representative of the collection is first displayed in the cells of the user interface. Then, the user can stretch (zoom-in) or compress (zoom-out) a portion of the displayed collection by moving a selected key frame displayed in a given cell to another cell. According to the invention, the zoom-in or zoom-out is fully customizable by selecting appropriately the cells $C_i$ and $C_j$.

According to a particular embodiment, in response to the input command, if the cells $C_i$ and $C_j$ are both past cells, only the key frames displayed in the past cells and the current cell are updated and if the cells $C_i$ and $C_j$ are both future cells, only the key frames displayed in the future cells and the current cell are updated.

According to another embodiment, in response to the input command, the key frames displayed in all cells are updated, except possibly the first cell and the last cell.

Thus, if the user moves the key frame of the cell $C_i$ to the cell $C_j$, with j>i, it will result in stretching (zooming-in) the portion of the collection displayed in the cells disposed along the time line before the cell $C_j$ while compressing (zooming-out) the portion of the collection displayed in the cells disposed along the time line after the cell $C_j$. Conversely, if the user moves the key frame of the cell $C_j$ to the cell $C_i$, it will result in compressing (zooming-out) the portion of the collection displayed in the cells disposed along the time line before the cell $C_j$ while stretching (zooming-in) the portion of the collection displayed in the cells disposed along the time line after the cell $C_j$.

According to a particular embodiment, the collection of frames is a video sequence.

According to a particular embodiment, the N key frames displayed in the N cells are determined by subsampling the video sequence.

According to a particular embodiment, the temporal distance between two key frames displayed in two consecutive cells is substantially constant. In this case, the subsampling step is fixed.

According to a particular embodiment, the N key frames displayed in the N cells are determined by:

- selecting a key frame of the collection to be placed into the current cell, and
- subsampling the portion of the video sequence preceding the selected key frame and subsampling a portion of the video sequence subsequent to the selected key frame in order to determine N-1 updating key frames to be displayed in the past cells and the future cells.

According to a particular embodiment, the temporal distance between two frames displayed in two consecutive cells of the past cells or the future cells is substantially constant. The subsampling step for determining the key frames of the past cells may be different from the subsampling step for determining the key frames of the future cells.

According to a particular embodiment, in response to the input command, the updating key frames are determined by subsampling a portion of the video sequence preceding the key frame displayed in the cell $C_i$ and subsampling a portion of the video sequence subsequent to the key frame displayed in the cell $C_i$.

According to another embodiment, the N key frames displayed in the N cells are determined by selecting N key frames in the video sequence according to a predetermined selection criterion. This selection may be based on saliency criterion or on the presence of faces, cuts or shots in the video sequence.

In this embodiment, the N key frames are advantageously selected among Q key frames determined according said predetermined selection criterion, with N<Q<P, and, when a transfer of a key frame from a cell $C_i$ to a cell $C_j$ is requested, the updating key frames are selected among the Q frames.

According to a particular embodiment, the updating key frames are determined by firstly selecting key frames among the key frames previously displayed in the N cells and, when appropriate, adding intermediate key frames issued from the collection of video frames.

According to a particular embodiment, the user interface comprises N= 2M+1 cells, one cell for the current cell, M cells for the past cells and M cells for the future cells.

According to a particular embodiment, the cells are disposed along the time line such the first M cells defines a first spiral of cells and the last M cells defines a second spiral of cells, said first and second spirals of cells being linked to both sides of the current cell.

According to a particular embodiment, the collection of video frames is a collection of reference frames, each reference frame being representative of a own video sequence having a creation date, said creation date being used as timestamp for the reference frame.

The invention also concerns a processing device for browsing a collection of P video frames through a user interface, wherein each video frame has a timestamp and wherein the user interface comprises N cells disposed along a time line with N<P, said processing device comprising a processor for processing said P video frames, a display element for displaying said user interface, an input circuit for receiving input commands, the processor being configured to:

- determine a subset of N video frames representative of the collection, said N video frames being non consecutive frames of the collection,
- display, on the screen element, the N video frames in the N cells of the user interface according to a chronological order, one of the N cells being defined as a current cell and the cells before and after the current cell along the time line being called past cells and future cells respectively,
- receive, from the input circuit, an input command requesting to transfer a selected video frame displayed in a cell $C_i$ to a cell $C_j$ of the user interface, the cells $C_i$ and $C_j$ being distinct,
- in response to the input command, update the video frame displayed in the cell $C_j$ by the selected video frame and update the video frames displayed in at least the cell $C_i$ and the cells comprised between the cell $C_i$ and the cell $C_j$, by video frames of the collection while maintaining the chronological order of the video frames in the N cells, at least one of the updating video frames being not included in the subset of N video frames.

**4. Brief description of the drawings**

The invention can be better understood with reference to the following description and drawings, given by way of example and not limiting the scope of protection, and in which:

- Fig. 1 is a screen capture illustrating a user interface with a scrollbar;

- Fig.2 is a screen capture illustrating a video player wherein a thumbnail of a video frame of a given instant is displayed above the time line when the user points this instant in the time line;

- Fig.3 is a screen capture illustrating a user interface with key frame filmstrip, reproduced from Barnes et al. Siggraph 2010;

- Fig.4 is a screen capture illustrating a user interface with a video tapestry, reproduced from Barnes et al. Siggraph 2010;

- Figs.5a to 5c illustrate examples of time line layouts;

- Fig.6 is a schematic view of a time line including two spirals ;

- Fig.7 is a schematic view of a time line user interface used for implementing the method according to the invention;

- Fig.8 is a flow chart showing the steps of method according to the invention;

- Fig.9 illustrates the step of displaying key frames in cells disposed along the time line of the user interface;

- Fig.10 illustrates a first example of input command for modifying the key frames displaying in the cells;

- Fig.11 illustrates an update operation of the key frames in cells of the user interface in response to the input command of Fig. 10;

- Fig.12 illustrates a second example of input command for modifying the key frames displaying in the cells;

- Fig.13 illustrates an update operation of the key frames in cells of the user interface in response to the input command of Fig.12;

- Fig.14 illustrates a third example of input command for modifying the key frames displaying in the cells;

- Fig. 15 illustrates an update operation of the key frames in cells of the user interface in response to the input command of Fig.14;

- Fig.16 illustrates a fourth example of input command for modifying the key frames displaying in the cells;

- Fig. 17 illustrates an update operation of the key frames in cells of the user interface in response to the input command of Fig.16;

- Fig.18 illustrates another example of update operation according to the invention; and

- Fig.19 is an exemplary architecture of a computer system implementing the method of the invention.

## 5. Description of embodiments

While example embodiments are capable of various modifications and alternative forms, embodiments thereof are shown by way of example in the drawings and will herein be described in details. It should be understood, however, that there is no intent to limit example embodiments to the particular forms disclosed, but on the contrary, example embodiments are to cover all modifications, equivalents, and alternatives falling within the scope of the claims. Like numbers refer to like elements throughout the description of the figures.

Methods discussed below, some of which are illustrated by the drawings, may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a storage medium. A processor(s) may perform the necessary tasks. Specific structural and functional details disclosed herein are merely representative for purposes of describing example embodiments of the present invention. This invention may, however, be embodied in many alternate forms and should not be construed as limited to only the embodiments set forth herein.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising," "includes" and/ or "including", when used herein, specify the presence of stated features, integers, steps, operations, elements and /or components, but do not preclude the presence or addition of one or more other features, integers, steps, operations, elements, components and /or groups thereof. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

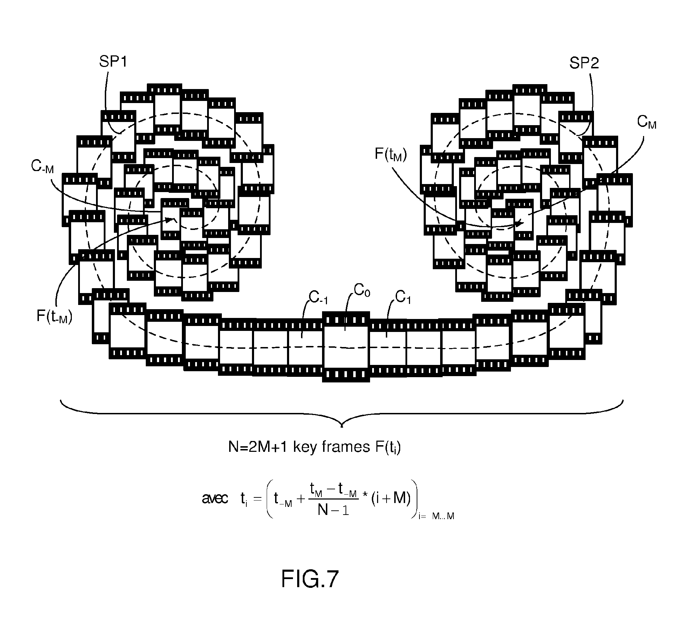

The invention will be described hereinafter by using a user interface layout having $N=2M+1$ cells $C_i$ disposed along a time line as illustrated by Fig.7, with $i \in [-M...+M]$. This user interface is used for browsing a video sequence of P video frames each having a timestamp, with $N<P$. Among the $2M+1$ cells, the $M+1^{th}$ cell along the time line is defined as the current cell, the M cells before the current cell are defined as past cells and the M cells after the current cell are defined as future cells.

In this figure, the first M cells along the time line (past cells) defines a first spiral SP1 of cells and the last M cells (future cells) defines a second spiral SP2 of cells, these first and second spirals of cells being linked to both sides of the current cell. The current cell is referenced $C_0$, the past cells are referenced $C_i$ with $i \in [-M...-1]$ and the future cells are referenced $C_i$ with $i \in [1...+M]$.

Of course, other geometries of 1-D or 2-D layout with cells disposed along a time line may be used for the user interface without departing from the scope of the invention. Likewise, cells do not have necessarily the same size and this size can vary according to the position of the cell. In the example of Fig.7, the size of the cells of each spiral is decreasing towards the center of the spiral and the current cell $C_0$ has the biggest size.

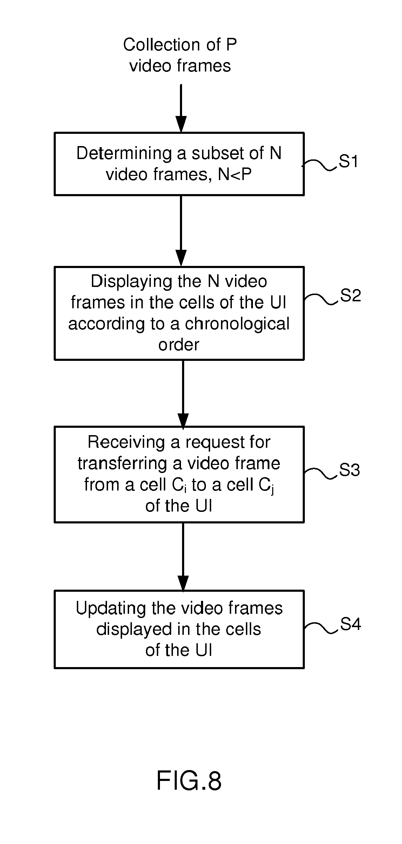

According to the invention and as illustrated by Fig.8, the method for browsing the video sequence (comprising P video frames) comprises first a step S1 for determining a subset of N key frames representative of the collection, the N key frames being non consecutive video frames of the video sequence. In a step S2, thumbnails of the N video frames are displayed in the N cells of the user interface according to a chronological order.

In a particular embodiment, the step S1 is implemented by subsampling the video sequence. Advantageously, the temporal distance between two successive video frames of the N video frames is substantially constant (the subsampling interval is thus fixed).

This embodiment is illustrated by Fig.7. N=2M+1 key frames are selected from the video sequence comprising P video frames by subsampling the video sequence with a subsampling step $\delta = \dfrac{t_M - t_{-M}}{N}$ where $t_{-M}$ and $t_M$ designate the timestamp of the first and last video frames displayed in the cells $C_{-M}$ and $C_M$. The key frames $F(t_i)$ are displayed in the cells $C_i$ with $t_i = \left( t_{-M} + \dfrac{t_M - t_{-M}}{N-1} * (i+M) \right)_{i=-M...M}$ .

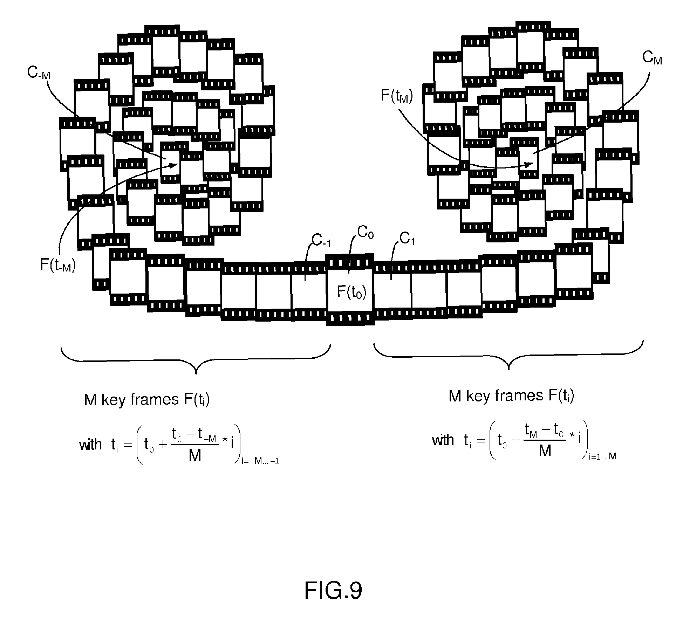

In a variant illustrated by Fig.9, the N key frames displayed in the N cells $C_i$ are determined by:

- selecting a key frame $F(t_0)$ to be placed into the current cell $C_0$, and
- subsampling the portion of the video sequence preceding the selected key frame and subsampling a portion of the video sequence subsequent to the selected key frame in order to have N-1 key frames to be displayed in the past cells and the future cells.

In this case illustrated by Fig.9, the past cells $C_i$ ($i \in [-M...-1]$) are filled with the key frames $F(t_i)$ with $t_i = \left( t_0 + \dfrac{t_0 - t_{-M}}{M} * i \right)_{i=-M...-1}$ and the future cells $C_i$ ($i \in [1...M]$) are filled with the key frames $F(t_i)$ with $t_i = \left( t_0 + \dfrac{t_M - t_0}{M} * i \right)_{i=1...M}$ .

In this embodiment, the portion of the video sequence preceding the key frame $F(t_0)$ is subsampled by a subsampling step $\delta_1 = \dfrac{t_0 - t_{-M}}{M}$ for determining the key frames to be displayed in the past cells $C_{-M}...C_{-1}$ and the portion of the video sequence subsequent to the key frame $F(t_0)$ is subsampled by a subsampling step $\delta_2 = \dfrac{t_M - t_0}{M}$ for determining the key frames to be displayed in the future cells $C_1...C_M$.

In reference to Fig.8, the method of the invention comprises also the step S3 of receiving an input command requesting to transfer a selected video frame displayed in a cell $C_i$ to a cell $C_j$ of the user interface, the cells $C_i$ and $C_j$ being distinct. Different input commands to the user interface may be used to modify the content of the current cell $C_0$ or other cells and to stretch (zoom-in) or compress (zoom-out) portions of the video displayed in the cells.

In response to this input command, the method of the invention comprises a step S4 (Fig.8) for updating the key frame displayed in the cell $C_j$ by the selected key frame and for updating the key frames displayed in at least the cell $C_i$ and the cells comprised between the cell $C_i$ and the cell $C_j$, by key frames of the collection while maintaining the chronological order of the key frames in the N cells.

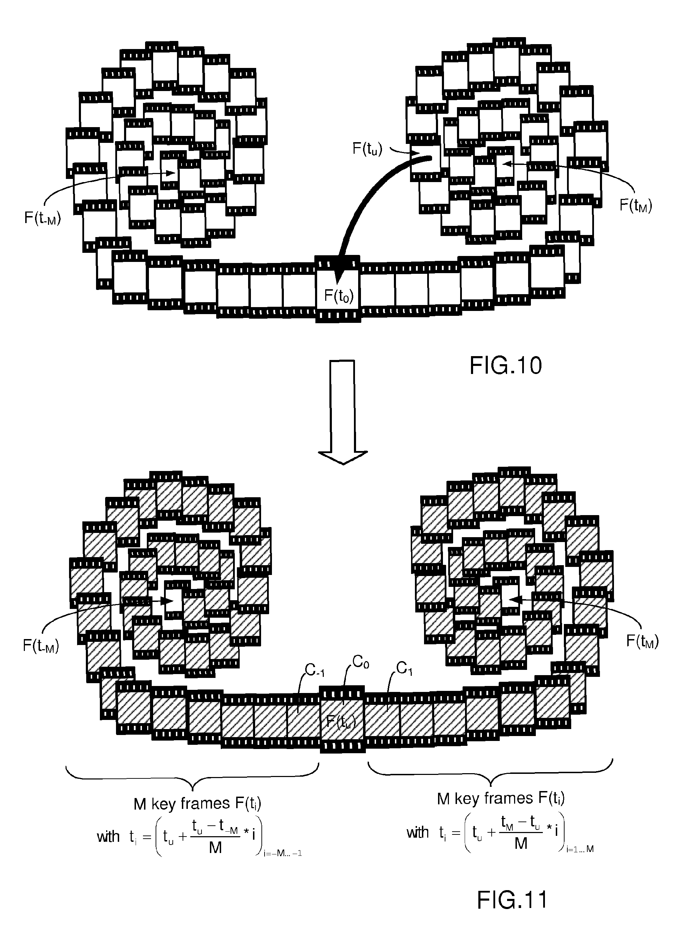

Examples of input commands will be described hereinafter in reference to Fig.10, Fig.12, Fig.14 and Fig.16 and the update operations in response to these interactions will be described hereinafter in reference to Fig.11, Fig.13, Fig.15 and Fig.17. These input commands may be entered by moving the cursor of a mouse on the screen displaying the user interface. In a variant, they are entered by moving a finger on a tactile screen displaying the user interface.

Fig.10 illustrates the case where the user wants to put a key frame $F(t_u)$ displayed by one future cell into the current cell $C_0$. This interaction can be realized by clicking/touching the thumbnail of the key frame $F(t_u)$ and dragging it onto the cell $C_0$.

In that case, the key frames $F(t_i)$ displayed in the cells $C_i$ are updated as illustrated by Fig.11. The key frame $F(t_u)$ is displayed in the cell $C_0$. The key frames $F(t_i)$ with $t_i = \left( t_u + \dfrac{t_u - t_{-M}}{M} * i \right)_{i=-M...-1}$ are displayed in the past cells $C_i$ ($i \in [-M...-1]$) and the key frames $F(t_i)$ with $t_i = \left( t_u + \dfrac{t_M - t_u}{M} * i \right)_{i=1...M}$ are displayed in the future cells $C_i$ ($i \in [1...M]$). The hatched cells indicate the cells in which the video key is updated.

It creates a zooming-in (stretching) effect in the future spiral (future cells) since the same number of key frames (M key frames) is used to describe less time ($t_M$-$t_u$ instead of $t_M$-$t_0$). Hence, more temporal details on what happens between instants $t_u$ and $t_M$ are revealed in the future spiral. Conversely, it creates a zooming-out (compressing) effect in the past spiral (past cells) since the same number of key frames (M video frames) is used to describe more time ($t_u$-$t_M$ instead of $t_0$-$t_M$).

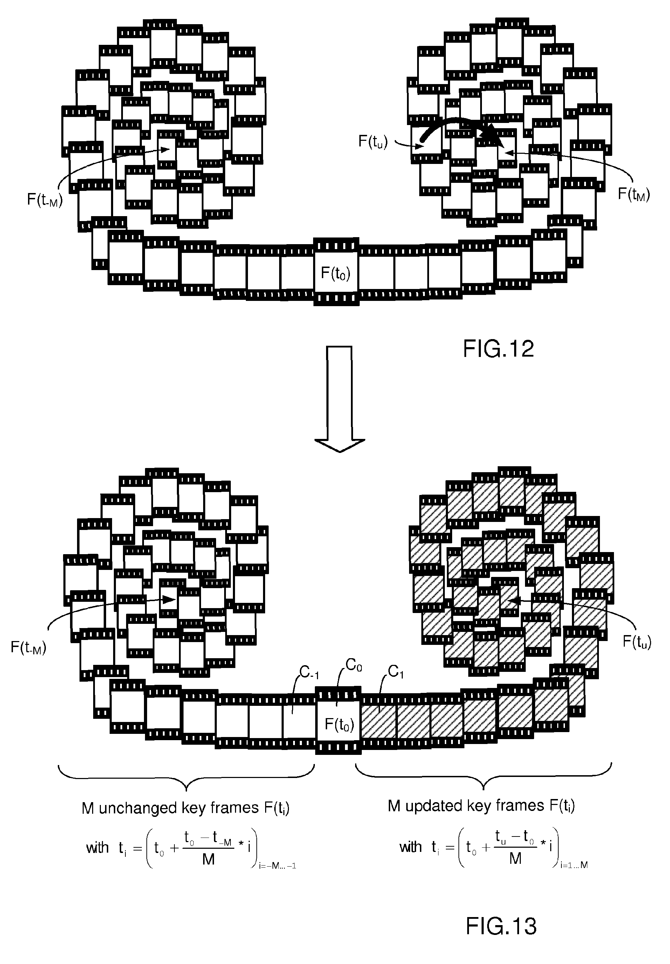

Fig.12 illustrates the case where the user wants to zoom-in between the key frame $F(t_0)$ displayed in the current cell $C_0$ and the video frame $F(t_u)$ displayed in one cell of one of the two spirals, for example the future spiral. This interaction can be realized by clicking/touching the thumbnail of the key frame $F(t_u)$ and dragging it onto a cell closer to the center of the future spiral. In Fig.12, the thumbnail of the key frame $F(t_u)$ is dragged onto the cell displaying the key frame $F(t_M)$.

In that case, the key frames $F(t_i)$ displayed in the cells $C_i$ are updated as illustrated by Fig.13. The key frame $F(t_u)$ is displayed in the cell $C_M$. The key frames $F(t_i)$ displayed in the past cells are unchanged and the key frames $F(t_i)$

with $t_i = \left( t_0 + \dfrac{t_u - t_0}{M} * i \right)_{i=1...M}$ are displayed in the future cells $C_i$ ($i \in [1...M]$). The subsampling step of the future spiral is reduced $\left( \dfrac{t_u - t_0}{M} < \dfrac{t_M - t_0}{M} \right)$, which provides the temporal zoom effect. To zoom out, the user may touch the key frame of the future spiral and drag it out of the spiral, then the key frame $F(t_M)$ will be re-set at the center of the spiral.

This action allows to reveal more temporal details on what happens between the key frame $F(t_0)$ and the key frame $F(t_u)$.

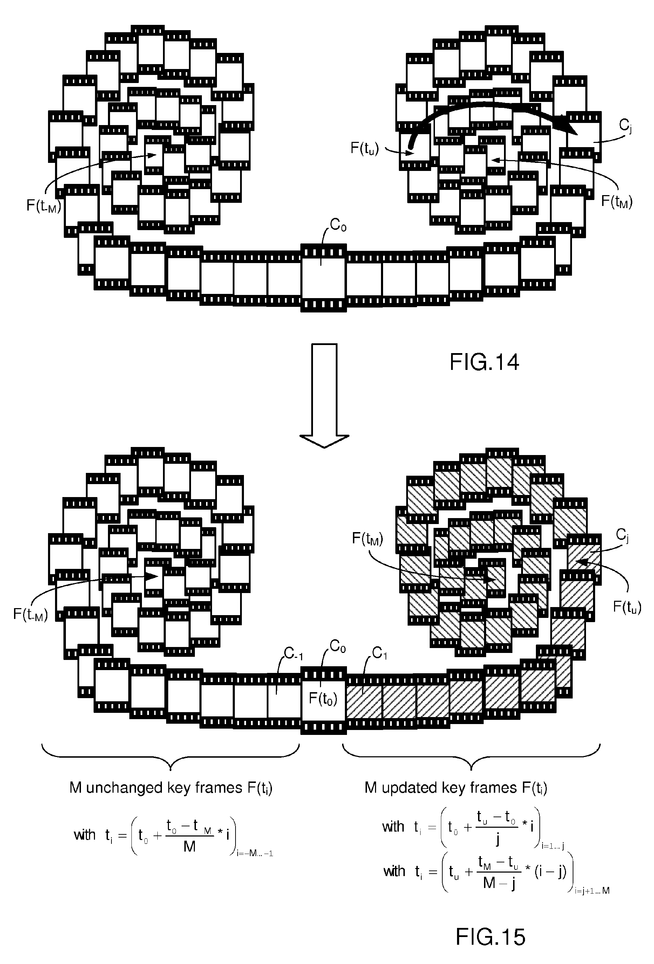

Fig.14 illustrates the case where the user wants to zoom-out (compress) between the key frame $F(t_0)$ displayed in the current cell $C_0$ and the key frame $F(t_u)$ displayed in one cell of the future spiral and zoom-in (stretch) between the key frame $F(t_u)$ and the last key frame $F(t_M)$ displayed in the last cell of the future spiral. This interaction can be realized by clicking/touching the thumbnail of the key frame $F(t_u)$ and dragging it onto a future cell $C_j$ more distant to the center of the future spiral (or closer to the center cell $C_0$).

In that case, the key frames $F(t_i)$ displayed in the cells $C_i$ are updated as illustrated by Fig.15. The key frame $F(t_u)$ is displayed in the cell $C_j$. The key frames $F(t_i)$ displayed in the past cells are unchanged and the key frames $F(t_i)$

with $t_i = \left( t_0 + \dfrac{t_u - t_0}{j} * i \right)_{i=1...j}$ are displayed in the future cells $C_i$ ($i \in [1...j]$) and the key frames $F(t_i)$ with

$t = \left( t_u + \dfrac{t_M - t_u}{M - j} * (i - j) \right)_{i=j+1...M}$ are displayed in the future cells $C_i$ ($i \in [j+1...M]$).

Two different subsampling steps $\delta_1$ and $\delta_2$ are then used inside the future spiral. $\delta_1 = \dfrac{t_u - t_0}{j}$ is applied to the j first key frames and $\delta_2 = \dfrac{t_M - t_u}{M - j}$ is applied to the M-j last key-frames.

Given k ($1 \leq k < M$ and $k \neq j$) the index of the cell containing the key frame $F(t_u)$ before user interaction, j>k corresponds to using more key frames to represent the time interval $[[t_0,t_u]]$ while using less key frames to represent the time interval $[[t_u,t_M]]$, i.e. stretching the representation of the time interval $[[t_0,t_u]]$ while compressing the representation of the time interval $[[t_u,t_M]]$.

On the contrary, j<k corresponds to using less key frames to represent $[[t_0,t_u]]$ while using more key-frames to represent $[[t_u,t_M]]$, i.e. compressing the representation of the time interval $[[t_0,t_u]]$ while stretching the representation of the time interval $[[t_u,t_M]]$.

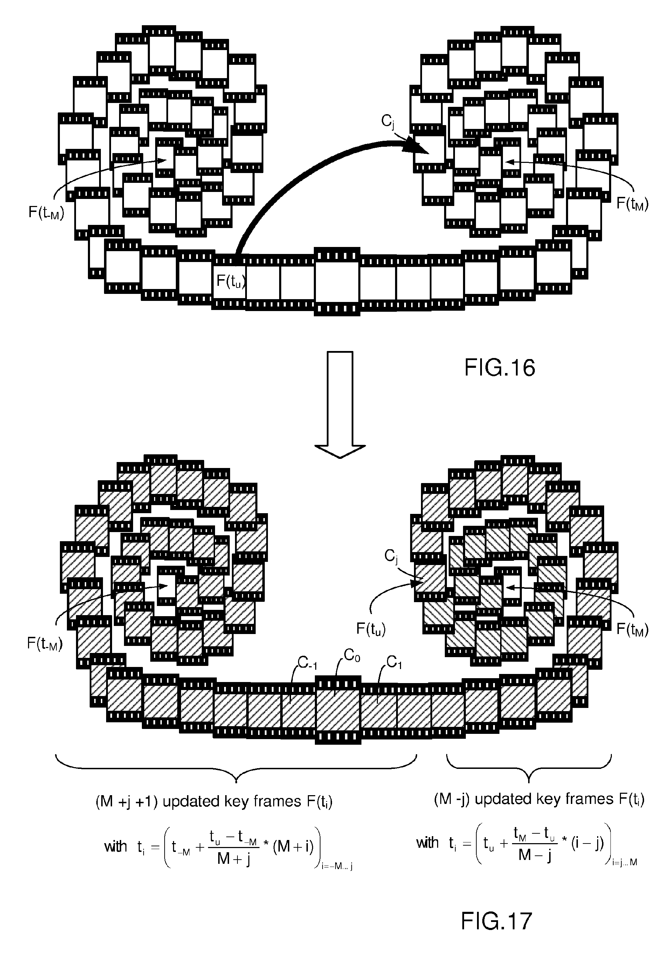

Fig.16 illustrates the case where the user wants to put a key frame $F(t_u)$ of the past spiral into a cell of the future spiral in order to zoom-in (stretch) the time interval $[[t_{-M},t_u]]$. This interaction can be realized by clicking/touching the thumbnail of the key frame $F(t_u)$ and dragging it onto a cell $C_j$ of the future spiral.

In that case, the key frames $F(t_i)$ displayed in the cells $C_i$ are updated as illustrated by Fig.17. The key frame

$F(t_u)$ is displayed in the cell $C_j$. The key frames $F(t_i)$ with $t_i = \left( t_{-M} + \dfrac{t_u - t_{-M}}{M + j} * (M + i) \right)_{i=-M...j}$ are displayed in the

cells $C_i$ ($i \in [-M...j]$) and the key frames $F(t_i)$ with $t_i = \left( t_u + \frac{t_M - t_u}{M - j} * (i - j) \right)_{i=j...M}$ are displayed in the future cells $C_i$

($i \in [j+1...M]$).

Of course, other interactions by dragging the key frame of a cell onto any other cell of the spirals are possible. The update operation can be applied to the cells of only one spiral (e.g. Fig.13 and Fig.15) or to cells of the two spirals (e.g. Fig.11 and Fig.17). The present user interface may also be used in conjunction with a video player in order to play a video from a given instant. In that case, the user may do it by double clicking on the cell displaying the video frame associated to the given instant. The video frame associated to the given instant is then transferred to cell C0 and the other cells of the user interface or a part of them are updated.

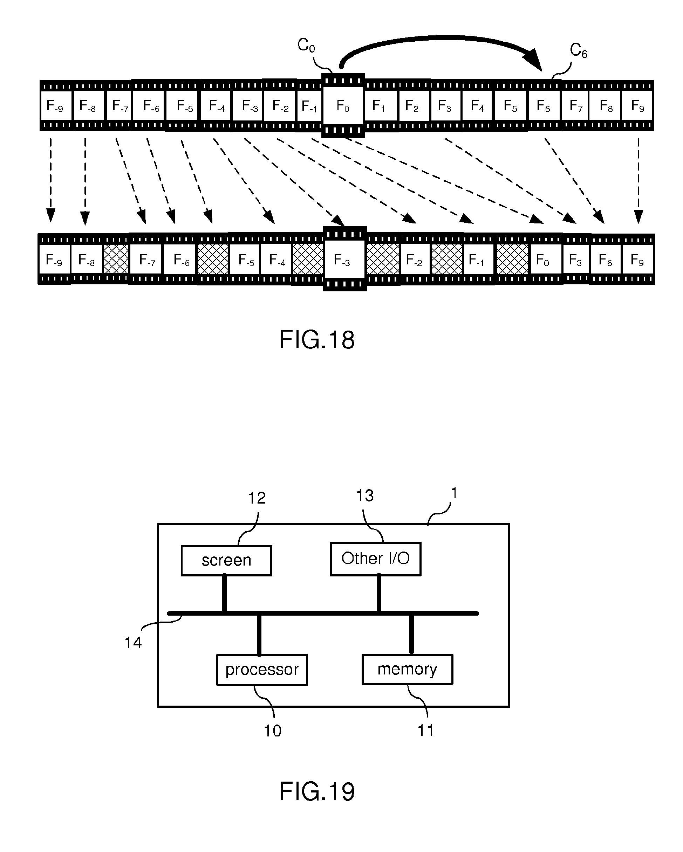

In some cases, it may be a bit disturbing for the user to see that the key frames of all the cells change as soon as the key frame of the current cell changes and not to see the previously displayed key frames anymore. To address this problem, it is proposed to, when zooming-in in a zone of cells, select the updating key frames among the key frames previously displayed in the cells of this zone, redistribute them linearly in this zone and to fill the empty cells by new key-frames selected from the video sequence by using a uniform subsampling. When zooming-out in a zone of cells, it is proposed to select the updating some key frames among the key frames previously displayed in this zone and to redistribute them linearly in the cells of the zone. This update operation is illustrated by Fig.18.

Fig.18 shows 19 cells wherein 19 key frames are displayed. For the sake of simplification, the indexing of the key frames is simplified. The key frames displayed in the cells $C_i$ are referenced $F_i$, $i \in [-9...+9]$. The user puts the frame $F_0$ in the cell $C_6$ in order to zoom-in the portion of the displayed video sequence between the key frames $F_{-9}$ and $F_0$. The update operation consists in keeping the key frames $F_{-9}$ to $F_0$ and redistributing them in the cells $C_{-9}$ to $C_6$. Conversely, the portion of the displayed video sequence between the key frames $F_0$ and $F_9$ is zoomed-out (compressed). Only the key frames $F_3$, $F_6$ and $F_9$ are kept and displayed in the cells $C_7$, $C_8$ and $C_9$.

All the examples given hereinabove are described where key frames and updating key frames are selected automatically using subsampling in time. Alternative solutions may be used for selecting the key frames such as a selection based on saliency, on detection of faces, cuts or shots in the video sequence. For example, Q frames can be selected among P frames of a video sequence, with Q<P, based on a saliency criterion. N key frames are selected among the Q frames in order to be displayed in the N cells of the user interface. When a transfer of a key frame from a cell $C_i$ to a cell $C_j$ is requested, the updating key frames are selected among the Q frames. For example, if there are K key frames to be updated, the K updating key frames can be selected by subsampling a portion of the Q frames, said portion being related to the part of the video sequence comprising key frames to be updated. In that case, this is not a time subsampling.

Likewise, the invention has been described hereinabove for browsing a video sequence. It can also be used for browsing other collections of frames, for example a collection of reference frames, each reference frame being representative of a own video sequence having a creation date, said creation date being used as timestamp for the reference frame. In that case, the key frames are selected by subsampling the collection of reference frames. The key frames are then displayed in the cells of the user interface in a chronological order by using the associated creation date.

Fig.19 represents an exemplary architecture of the processing device 1 according to a specific and non-limitative embodiment of the invention. The processing device 1 comprises one or more processor(s) 10, which is(are), for example, a CPU, a GPU and/or a DSP (English acronym of Digital Signal Processor), along with an internal memory 11 (e.g. RAM, ROM, EPROM). The processing device 1 comprises one screen 12 to display the user interface and other Input/Output circuit(s) 13, such as a mouse, a keyboard, a touchpad, adapted to allow a user entering input commands and/or data. The input commands can also be entered by a tactile screen. The processing device 1 may also comprise network interface(s) (not shown). All these circuits communicate through a bus 14.

The internal memory 11 stores a computer program comprising instructions which, when executed by the processing device 1, in particular by the processor 10, make the processing device 1 carry out the processing method described in Fig.8. As a variant, the computer program is stored externally to the processing device 1 on a non-transitory digital data support, e.g. on an external storage medium such as a HDD, CD-ROM, DVD, a read-only and/or DVD drive and/or a DVD Read/Write drive, all known in the art. The processing device 1 thus comprises an interface to read the computer program. The processing device 1 may also access one or more Universal Serial Bus (USB)-type storage devices (e.g., "memory sticks.") through corresponding USB ports (not shown).

According to exemplary and non-limitative embodiments, the processing device 1 is a device, which belongs to a set comprising:

- a mobile device;
- a communication device;
- a game device;

- a tablet (or tablet computer);
- a laptop;
- a still picture camera; and
- a video camera;

According to the invention, the processor is configured to implement the following steps:

- determine a subset of N video frames representative of the collection, said N video frames being non consecutive frames of the collection,
- display, on the screen element, the N video frames in the N cells of the user interface according to a chronological order, one of the N cells being defined as a current cell and the cells before and after the current cell along the time line being called past cells and future cells respectively,
- receive, from the input circuit, an input command requesting to transfer a selected video frame displayed in a cell $C_i$ to a cell $C_j$ of the user interface, the cells $C_i$ and $C_j$ being distinct,
- in response to the input command, update the video frame displayed in the cell $C_j$ by the selected video frame and update the video frames displayed in at least the cell $C_i$ and the cells comprised between the cell $C_i$ and the cell $C_j$, by video frames of the collection while maintaining the chronological order of the video frames in the N cells, at least one of the updating video frames being not included in the subset of N video frames.

**Claims**

1. Method for browsing a collection of P video frames through a user interface, wherein each video frame has a timestamp and wherein the user interface comprises N cells disposed along a time line with N<P, said method comprising the steps of:

   - determining (S1) a subset of N video frames, called key frames, representative of the collection of video frames, said N key frames being non consecutive video frames of the collection,
   - displaying (S2) the N key frames in the N cells of the user interface according to a chronological order, one of the N cells being defined as a current cell and the cells before and after the current cell along the time line being called past cells and future cells respectively,
   - receiving (S3) an input command requesting to transfer a selected key frame displayed in a cell $C_i$ to a cell $C_j$ of the user interface, the cells $C_i$ and $C_j$ being distinct,
   - in response to the input command, updating (S4) the key frame displayed in the cell $C_j$ by the selected key frame and updating the key frames displayed in at least the cell $C_i$ and the cells comprised between the cell $C_i$ and the cell $C_j$, by frames, called updating key frames, of the collection while maintaining the chronological order of the key frames in the N cells, at least one of the updating key frames being not included in the subset of N key frames.

2. Method according to claim 1, wherein, in response to the input command, if the cells $C_i$ and $C_j$ are both past cells, only the key frames displayed in the past cells and the current cell are updated and if the cells $C_i$ and $C_j$ are both future cells, only the key frames displayed in the future cells and the current cell are updated.

3. Method according to claim 1, wherein, in response to the input command, the key frames displayed in all cells are updated, except possibly the first cell and the last cell.

4. Method according to any one of claims 1 to 3, wherein, the collection of P frames is a video sequence.

5. Method according to claim 4, wherein the N key frames displayed in the N cells are determined by subsampling the video sequence.

6. Method according to claim 5, wherein the temporal distance between two key frames displayed in two consecutive cells is substantially constant.

7. Method according to claim 4, wherein the N key frames displayed in the N cells are determined by:

   - selecting a key frame of the collection to be placed into the current cell, and
   - subsampling the portion of the video sequence preceding the selected key frame and subsampling a portion of the video sequence subsequent to the selected key frame in order to determine N-1 updating key frames to be displayed in the past cells and the future cells.

8. Method according to claim 7, wherein the temporal distance between two frames displayed in two consecutive cells of the past cells or the future cells is substantially constant.

9. Method according to any of claims 4 to 8, wherein the updating key frames are determined by subsampling a portion of the video sequence preceding the key frame displayed in the cell $C_i$ and subsampling a portion of the video sequence subsequent to the key frame displayed in the cell $C_i$.

10. Method according to claim 4, wherein the N key frames displayed in the N cells are determined by selecting N key frames in the video sequence based on a saliency criterion or on the presence of faces or on the presence of cuts in the video sequence.

11. Method according to claim 10, wherein the N key frames are selected among Q key frames determined according said predetermined selection criterion, with N<Q<P, and, when a transfer of a key frame from a cell $C_i$ to a cell $C_j$ is requested, the updating key frames are selected among the Q frames.

12. Method according to any one of claims 1 to 11, wherein the updating key frames are determined by firstly selecting key frames among the key frames previously displayed in the N cells and, when appropriate, adding intermediate key frames issued from the collection of video frames.

13. Method according to any one of claims 1 to 12, wherein the user interface comprises N= 2M+1 cells, one cell for the current cell, M cells for the past cells and M cells for the future cells.

14. Method according to claim 13, wherein the cells are disposed along the time line such the first M cells defines a first spiral of cells and the last M cells defines a second spiral of cells, said first and second spirals of cells being linked to both sides of the current cell.

15. Method according to any one of claims 1 to 3, wherein the collection of video frames is a collection of reference frames, each reference frame being representative of a own video sequence having a creation date, said creation date being used as timestamp for the reference frame.

16. Device for browsing a collection of P video frames through a user interface, wherein each video frame has a timestamp and wherein the user interface comprises N cells disposed along a time line with N<P, said processing device comprising a processor for processing said P video frames, a display element for displaying said user interface, an input circuit for receiving input commands, the processor being configured to:

- determine a subset of N video frames representative of the collection, said N video frames being non consecutive frames of the collection,
- display, on the screen element, the N video frames in the N cells of the user interface according to a chronological order, one of the N cells being defined as a current cell and the cells before and after the current cell along the time line being called past cells and future cells respectively,
- receive, from the input circuit, an input command requesting to transfer a selected video frame displayed in a cell $C_i$ to a cell $C_j$ of the user interface, the cells $C_i$ and $C_j$ being distinct,
- in response to the input command, update the video frame displayed in the cell $C_j$ by the selected video frame and update the video frames displayed in at least the cell $C_i$ and the cells comprised between the cell $C_i$ and the cell $C_j$, by video frames of the collection while maintaining the chronological order of the video frames in the N cells, at least one of the updating video frames being not included in the subset of N video frames.

FIG.1

FIG.2

FIG.3

FIG.4

FIG.5a    FIG.5b    FIG.5c

FIG.6

SP1   SP2

$C_{-M}$   $C_M$

$F(t_M)$   $F(t_M)$

$C_{-1}$   $C_0$   $C_1$

$F(t_{-M})$

N=2M+1 key frames $F(t_i)$

$$\text{avec} \quad t_i = \left( t_{-M} + \frac{t_M - t_{-M}}{N-1} * (i+M) \right)_{i=-M...M}$$

FIG.7

Collection of P
video frames

↓

| Determining a subset of N video frames, N<P | S1 |

↓

| Displaying the N video frames in the cells of the UI according to a chronological order | S2 |

↓

| Receiving a request for transferring a video frame from a cell $C_i$ to a cell $C_j$ of the UI | S3 |

↓

| Updating the video frames displayed in the cells of the UI | S4 |

FIG.8

$C_{-M}$

$F(t_M)$

$C_M$

$F(t_{-M})$

$C_{-1}$  $C_0$  $C_1$

$F(t_0)$

M key frames $F(t_i)$

with $t_i = \left( t_0 + \dfrac{t_0 - t_{-M}}{M} * i \right)_{i=-M...-1}$

M key frames $F(t_i)$

with $t_i = \left( t_0 + \dfrac{t_M - t_c}{M} * i \right)_{i=1...M}$

FIG.9

FIG.10

M key frames $F(t_i)$

with $t_i = \left( t_u + \dfrac{t_u - t_{-M}}{M} * i \right)_{i=-M\ldots-1}$

M key frames $F(t_i)$

with $t_i = \left( t_u + \dfrac{t_M - t_u}{M} * i \right)_{i=1\ldots M}$

FIG.11

$F(t_{-M})$

$F(t_u)$

$F(t_M)$

$F(t_0)$

FIG.12

$F(t_{-M})$

$C_{-1}$   $C_0$   $C_1$

$F(t_0)$

$F(t_u)$

M unchanged key frames $F(t_i)$

$$\text{with} \quad t_i = \left( t_0 + \frac{t_0 - t_{-M}}{M} * i \right)_{i=-M\ldots-1}$$

M updated key frames $F(t_i)$

$$\text{with} \quad t_i = \left( t_0 + \frac{t_u - t_0}{M} * i \right)_{i=1\ldots M}$$

FIG.13

FIG.14

M unchanged key frames $F(t_i)$

with $t_i = \left( t_0 + \dfrac{t_0 - t_M}{M} * i \right)_{i=-M...-1}$

M updated key frames $F(t_i)$

with $t_i = \left( t_0 + \dfrac{t_u - t_0}{j} * i \right)_{i=1...j}$

with $t_i = \left( t_u + \dfrac{t_M - t_u}{M - j} * (i - j) \right)_{i=j+1...M}$

FIG.15

FIG.16

(M +j +1) updated key frames $F(t_i)$

with $t_i = \left( t_{-M} + \dfrac{t_u - t_{-M}}{M + j} * (M + i) \right)_{i=-M...j}$

(M -j) updated key frames $F(t_i)$

with $t_i = \left( t_u + \dfrac{t_M - t_u}{M - j} * (i - j) \right)_{i=j...M}$

FIG.17

$C_0$                      $C_6$

| $F_{-9}$ | $F_{-8}$ | $F_{-7}$ | $F_{-6}$ | $F_{-5}$ | $F_{-4}$ | $F_{-3}$ | $F_{-2}$ | $F_{-1}$ | $F_0$ | $F_1$ | $F_2$ | $F_3$ | $F_4$ | $F_5$ | $F_6$ | $F_7$ | $F_8$ | $F_9$ |

| $F_{-9}$ | $F_{-8}$ | | $F_{-7}$ | $F_{-6}$ | | $F_{-5}$ | $F_{-4}$ | | $F_{-3}$ | | $F_{-2}$ | | $F_{-1}$ | | $F_0$ | $F_3$ | $F_6$ | $F_9$ |

FIG.18

| | 12 | | 13 | | 1 |
| --- | --- | --- | --- | --- | --- |
| | screen | | Other I/O | | |
| 14 | | | | | |
| | processor | | memory | | |
| | 10 | | 11 | | |

FIG.19

Europäisches
Patentamt

European
Patent Office

Office européen
des brevets

# EUROPEAN SEARCH REPORT

Application Number

EP 15 30 5327

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/097507 A1 (PREWETT GEOFFREY [CN]) 18 April 2013 (2013-04-18) * paragraphs [0010] - [0016]; figure 2 * | 1-16 | INV. G06F3/048 G11B27/10 G11B27/34 |
| A | US 2009/063981 A1 (KIKUCHI TORU [JP] ET AL) 5 March 2009 (2009-03-05) * paragraphs [0100] - [0107], [0133]; figures 4,5 * | 1,4-13, 15,16 | |
| A,D | GB 2 461 757 A (PAPPAS-KATSIAFAS EVANGELOS [GB]) 20 January 2010 (2010-01-20) * figure 6 * | 14 | |

TECHNICAL FIELDS
SEARCHED      (IPC)

G11B
H04N
G06F

The present search report has been drawn up for all claims

| Place of search | Date of completion of the search | Examiner |
|---|---|---|
| The Hague | 18 September 2015 | Mourik, Piet |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 15 30 5327

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2015

| Patent document cited in search report | Publication date | Patent family member(s) | Publication date |
|---|---|---|---|
| US 2013097507 A1 | 18-04-2013 | CN 103999158 A<br>EP 2769380 A1<br>US 2013097507 A1<br>WO 2013059030 A1 | 20-08-2014<br>27-08-2014<br>18-04-2013<br>25-04-2013 |
| US 2009063981 A1 | 05-03-2009 | NONE | |
| GB 2461757 A | 20-01-2010 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2461757 A